# EUROPEAN PATENT SPECIFICATION

(11) **EP 3 587 511 B1**
(45) Date of publication and mention of the grant of the patent: **10.04.2024**
(21) Application number: 18179594.9
(22) Date of filing: 25.06.2018
(51) Int. Cl.: C09D 11/101, C09D 11/54

(54) **IMPROVEMENT OF UV INK ADHESION**
VERBESSERUNG DER UV-TINTENHAFTUNG
AMÉLIORATION DE L'ADHÉSION DE L'ENCRE UV

(43) Date of publication of application: 01.01.2020
(73) Proprietor: Canon Production Printing Holding B.V., 5914 HH Venlo (NL)
(72) Inventor: HOFSTRA, Ronald M.J., 5914 CA Venlo (NL); BLOCKEN, Evelyn R.C.Y., 5914 CA Venlo (NL); VAN BUUL, Arend M., 5914 CA Venlo (NL); VAN DE PUT, Marcellus W.P., 5914 CA Venlo (NL)
(74) Representative: Canon Production Printing IP Department

(56) References cited:
- EP-A1- 1 710 282
- EP-A1- 3 251 818
- WO-A2-2012/170706
- JP-A- 2008 006 779
- JP-A- 2012 046 687

## Description

### FIELD OF THE INVENTION

The present invention relates to a primer composition for a radiation-curable ink composition, a kit comprising the primer composition and a method of applying an image onto a recording medium using the primer composition.

### STATE OF THE ART

Sufficient adhesion of a printing ink on a recording medium is of high importance during printing, wherein a variety of different recording media are encountered. As these recording media vary in surface composition and characteristics, primer compositions can be used to enhance adhesion of the printing ink on the recording medium.

A variety of different primer compositions have been developed for these purpose. For example, polymeric cations added in an aqueous primer solution are believed to promote adhesion of a deposited top layer, e.g. a printing ink, which is attributed to their ionic interaction with negatively charged surface groups of the substrate and intermingling of the polymer with the polymers of the top layer. However, those polymeric cations are usually insoluble in an acrylate primer or ink vehicle, which makes them less suitable.

US 2003/0119939 describes ink compositions with a polyquatenary amine and quaternary ammonium substituted UV absorbing compound.

EP 2077304 discloses an ink receiving layer of a recording medium comprising a polymer having cationic groups.

Furthermore, EP 1710282 mentions modifying a substrate by applying a primer comprising a polymer comprising a plurality of cationic groups, such as NR₄⁺ groups. The cationic groups are covalently attached to a polymer. This polymer can be made by reacting an ethylenic group, but the document does not disclose that the primer itself comprises an ethylenic group.

In US 2017/0342282 A1 a UV curable adhesion promoting inkjet ink is described consisting of at least one photoinitiator, a polymerizable oligomer, a polyfunctional propoxylated acrylate and a carefully chosen monofunctional ethoxylated methacrylate. A colorless ink as adhesion promoting primer on glass is mentioned.

In WO 2017 208562 A1 a photocurable primer ink composition with good adhesion on non-absorbing base and capable of forming a primer layer of low tackiness is described.

JP 2012046687 discloses a coating agent suitable as an ink reception layer in inkjet printing.

However, there remains a need for a primer composition with improved adhesion on a recording medium that particularly can be easily and uniformly applied, as well as for a method wherein an image can be suitably applied onto a recording medium and has sufficient adhesion.

### SUMMARY OF THE INVENTION

The present inventors found that a primer composition can be prepared that sufficiently adheres to a recording medium using at least a first radiation-curable component comprising a quaternary cationic function, e.g. an ammonium function, while the compound is still sufficiently soluble to be evenly distributed, and furthermore can provide sufficient adhesion of an image printed thereon. The inventors further found also an improved adhesion of the printed layer due to the presence of the cationic groups in the first radiation-curable component.

In a first aspect the present invention relates to a primer composition for an ink, according to claim 1.

Furthermore disclosed is a kit, comprising the present primer composition and at least one radiation-curable ink composition.

In addition the present invention is directed to a method of applying an image onto a recording medium, comprising the steps of
- applying the present primer composition onto the recording medium; and
- optionally curing the primer composition;
- applying at least one radiation-curable ink composition onto the primer composition; and
- curing the at least one radiation-curable ink composition.

Also disclosed is the use, according to claim 11, of a radiation-curable component in a primer composition for an ink.

Further aspects and embodiments of the invention are disclosed in the dependent claims and can be taken from the following description, figures and examples, without being limited thereto.

### DETAILED DESCRIPTION OF THE INVENTION

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually and appropriately detailed structure. In particular, features presented and described in separate dependent claims may be applied in combination, and any combination of such claims is herewith disclosed.

Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language).

Unless defined otherwise, technical and scientific terms used herein have the same meaning as commonly understood by one of ordinary skill in the art to which this invention belongs.

Radiation within the present invention is not particularly restricted and refers to any radiation that can react at least one component of the present primer composition and/or at least one component of the ink composition in the present kit composition and/or used in the present method.

In the present specification, amounts of a substance are usually given as weight/mass percent (wt%, m%), unless noted otherwise or clear from the context. In the present primer composition, the amounts add up to 100 wt%.

A first aspect of the present invention relates to a primer composition for an ink, comprising a first radiation-curable component, wherein the first radiation-curable component comprises at least one compound selected from the group of components of Formula IVa: 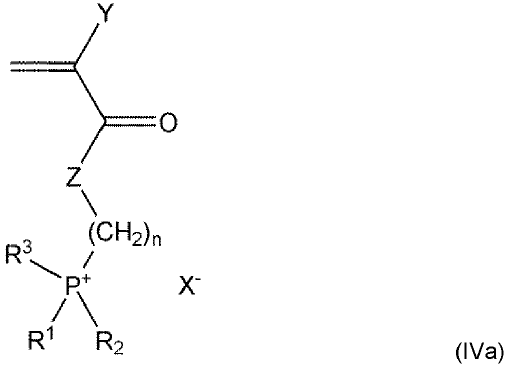 wherein Y, Z, R¹, R², R³ and n are as defined for the compound of Formula IV and X⁻ is a counterion for the ammonium function that is not particularly restricted. For example, X⁻is a halogenide ion like F⁻, Cl⁻, Br and/or I⁻, a pseudohalogenide ion like N₃⁻, CN⁻, NCO⁻, CNO⁻, NCS⁻, CNS⁻, etc., or another monovalent ion, particularly a counterion that does not interfere in curing, e.g. a halogenide ion like F⁻, Cl⁻, Br and/or I⁻.

In Formula IV, Y can be either hydrogen or a methyl group, so that the end group in the respective residue represents an acryl or a methacryl moiety. Both groups are possible, and it is also possible that at least two compounds of Formula IV are used as first radiation-curable component, e.g. one with an acryl moiety and one with a methacryl moiety.

Furthermore, Z can be NH or CH₂, and is preferably NH. Following the residue Z is an alkylene chain (CH₂)ₙ with 1 to 20 carbon atoms in the chain, preferably 1 to 10 carbon atoms in the chain, further preferably 1 to 6 carbon atoms in the chain, even further preferably 1 to 4 carbon atoms in the chain, e.g. 1 to 3 carbon atoms in the chain, e.g. 1, 2 or 3 carbon atoms. A shorter alkylene chain is preferable to enable good solubility, particularly in a polar primer composition.

R¹, R² and R³ are independently selected from optionally substituted alkyl residues with 1 to 10 carbon atoms, preferably 1 to 6 carbon atoms, wherein preferably two of the three residues R¹, R² and R³ are independently selected from short alkyl residues with 1 to 4 carbon atoms, preferably 1, 2 or 3 carbon atoms, and have e.g. 1 carbon atom, e.g. are methyl groups. Again, shorter alkyl chains are preferable from the viewpoint of solubility.

R¹, R² and R³ can be linear or branched but are preferably linear so that the charge of the ammonium residue is not blocked too much by the alkyl residues. Furthermore, while R¹, R² and R³ can be substituted, e.g. by halogenide (e.g. F, Cl, Br, I) or pseudohalogenide (e.g. CN, NC, N₃, CNO, NCO, NCS, CNS, etc.) groups instead of H, they are preferably unsubstituted.

According to certain embodiments, the first radiation-curable component comprising at least one cationic NR₄⁺ and/or PR₄⁺ group is not polymeric. The first radiation-curable component preferably comprises at least functional group capable of undergoing a polymerization reaction, such as a vinyl group or a (meth)acrylate group.

Preferably the first radiation-curable component is curable with radiation in a wavelength range between and encompassing 100 and 405 nm, further preferably between and encompassing 200 and 405 nm, particularly preferably between and encompassing 315 and 400 nm.

According to certain embodiments the first radiation-curable component comprises, preferably is, a compound of Formula V: 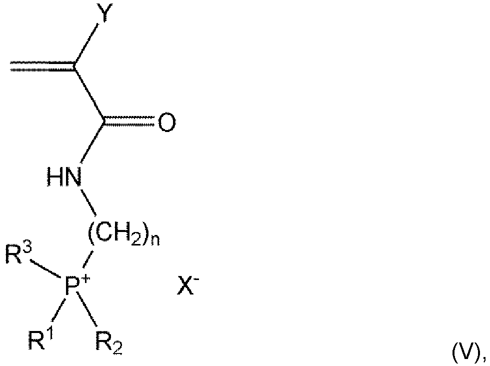 wherein Y, X, R¹, R², R³ and n are as defined for the compound of Formula IVa.

According to certain embodiments the first radiation-curable component comprises, preferably is, a compound of Formula Va: 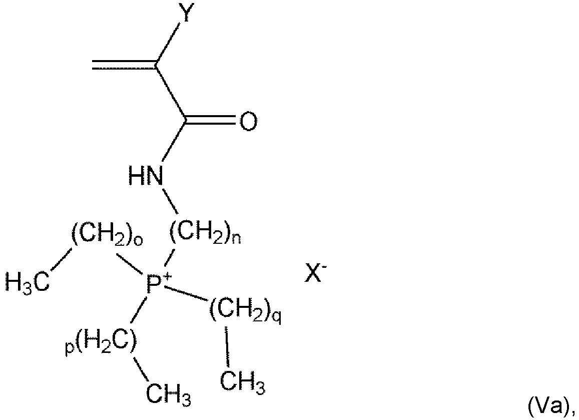 wherein Y, X and n are as defined for the compound of Formula IVa, and o, p and q are independently selected from an integer between 0 and 9, preferably between 1 and 6, further preferably between 2 and 5.

According to certain embodiments the first radiation-curable component comprises, preferably is, a compound of Formula Vb: 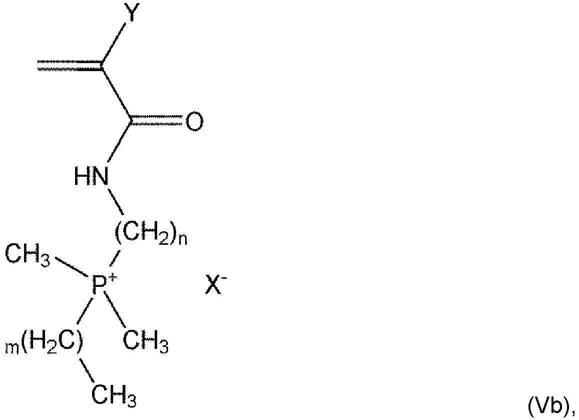 wherein Y, X and n are as defined for the compound of Formula IVa, and m is an integer between 0 and 9, preferably between 1 and 6, further preferably between 2 and 5.

According to certain embodiments the first radiation-curable component comprises, preferably is, a compound of Formula VI: 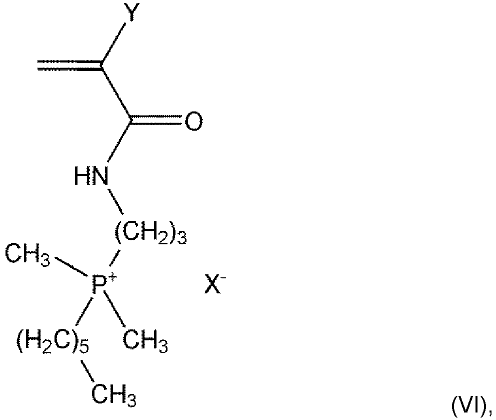 wherein Y and X are as defined for the compound of Formula IVa.

According to certain embodiments the first radiation-curable component comprises, preferably is, a compound of Formula Vla:

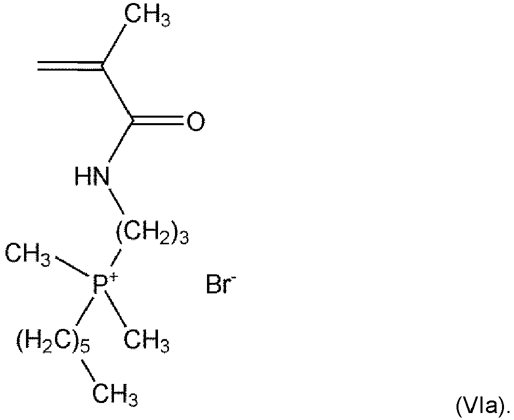

In the present primer composition it is also possible that a compound of Formula I and a compound of Formula IV are both present. According to certain embodiments, a compound of Formula I or a compound of Formula IV is present in the primer composition.

The amount of the first radiation-curable component in the present primer composition is not particularly restricted. According to certain embodiments, the amount of the first radiation-curable component in the primer composition is in a range between and including 0,1 and 99 wt.%, preferably between and including 0,5 and 25 wt.%, further preferably between and including 0,8 and 20 wt.%, e.g. between and including 1,0 and 12 wt.%, based on the total weight of the primer composition.

Apart from the first radiation-curable component the primer composition can further comprise components that are usually used in primer compositions for ink and which are not particularly restricted. For example, at least a second radiation-curable component, at least one photo initiator, a surfactant, one or more solvents, one or more pH regulators, a biocide, an antioxidant, one or more oxygen scavengers, etc. can be contained in the primer composition.

Also the amounts of the further components comprised in the primer composition apart from the first radiation-curable component are not particularly restricted.

According to certain embodiments, the primer composition further comprises at least a second radiation-curable component and/or at least one photo initiator. The second radiation-curable component and the at least one photo initiator are not particularly restricted in this regard.

According to certain embodiments, the second radiation-curable component comprises or is at least one (meth)acrylate, preferably a substituted (meth)acrylate, further preferably a substituted acrylate. The substituted acrylate can be monofunctional or polyfunctional, but preferably is at least difunctional, e.g. difunctional. According to certain embodiments the second radiation-curable component comprises or is at least one di(meth)acrylate, e.g. a diacrylate which can be substituted, e.g. by suitable alkyl groups and/or alkoxy groups, e.g. independently comprising 1 to 40 carbon atoms, e.g. 1 to 20 carbon atoms. For example, a substituted glycol di(meth)acrylate like difunctional propoxylated 2 neopentyl glycol diacrylate can be used as or be a second radiation-curable component.

The amount of the second radiation-curable component is not particularly restricted. For example, it can be comprised in an amount between 0 and 99.9 wt.%, preferably between 40 and 97 wt.%, e.g. between 60 and 95 wt.%, based on the total weight of the primer composition.

The at least one photo initiator is not particularly restricted and can be any photo initiator that can be suitably used in a polymerization reaction, particularly a polymerization that can be started with a suitable radiation, e.g. UV-radiation as defined above. A photo initiator can convert absorbed light energy, e.g. UV or visible light, into chemical energy in the form of initiating species, free radicals or cations. Preferably the photo initiator in the present ink composition is activated by UV light. For example, photo initiators as commonly used in primers or printing inks can be used.

For photo initiators, two types of photo initiators generally exist based on the mechanism by which initiating radicals are formed, i.e. a type I photo initiator and a type II photo initiator. Type I photo initiators are cleaved by irradiation at a reactive bond, yielding free radicals. Type II photo initiators are excited by irradiation, and in the excited state the photo initiator interacts with a co-initiator to generate free radicals. Thus, a type II photo initiator requires a second molecule to interact. The type I and type II photo initiators are not particularly limited, and many suitable compounds are known.

Type I photo initiators comprise, for example, benzoin ethers, benzyl ketals, α-dialkyloxyacetophenones, α-hydroxyalkylphenones, α-aminoalkylphenones and acylphosphine oxides, e.g. 1-hydroxy-cyclohexylphenyl-ketone, and type II photo initiators comprise, for example, benzophenonse/amines and thioxanthones/amines.

The amount of the one or more photo initiator, i.e. all photo initiators present, is not particularly restricted and can be e.g. between 0 and 20 wt%, preferably between 0.1 and 15 wt%, more preferably between 0.25 and 7.5 wt.%, further preferably between 0.5 and 5 wt.%, particularly between 0.7 and 2.5 wt.%, based on the total weight of the primer composition. If more than one photo initiator is used, they can be mixed in a suitable ratio and suitable amounts.

Furthermore further additives like a surfactant, one or more solvents, one or more pH regulators, a biocide, an antioxidant, one or more oxygen scavengers, and/or a polymerization inhibitor, etc. can be used in the present primer composition in usual amounts.

For example, one or more surfactants can be contained in the present primer composition to suitably set the viscosity of the primer composition, and to improve the wettability of the surface of a recording medium. Examples of surfactants are not specifically limited. The following can be cited.

Examples of the surfactant include nonionic surfactants, cationic surfactants, anionic surfactants, amphoteric surfactants, in particular betaine surfactants, silicone surfactants, and fluorochemical surfactants.

Examples of a cationic surfactant include: aliphatic amine salts, aliphatic quarternary ammonium salts, benzalkonium salts, benzethonium chloride, pyridinium salts, imidazolinium salts.

Examples of an anionic surfactant include: polyoxyethylene alkylether acetic acid salts, dodecylbenzene sulfonic acid salts, lauric acid salts, and salts of polyoxyethylene alkylether sulfate, an aliphatic acid soap, an N-acyl-N-methyl glycin salt, an N-acyl-N-methyl-β-alanine salt, an N-acylglutamate, an acylated peptide, an alkylsulfonic acid salt, an alkylbezenesulfonic acid salt, an alkylnaphthalenesulfonic acid salt, a dialkylsulfo succinate (e.g. sodium dioctyl sulfosuccinate (DSS); alternative names: docusate sodium, Aerosol OT and AOT), alkylsulfo acetate, α-olefin sulfonate, N-acylmethyl taurine, a sulfonated oil, a higher alcohol sulfate salt, a secondary higher alcohol sulfate salt, an alkyl ether sulfate, a secondary higher alcohol ethoxysulfate, a polyoxyethylene alkylphenyl ether sulfate, a monoglysulfate, an aliphatic acid alkylolamido sulfate salt, an alkyl ether phosphate salt and an alkyl phosphate salt.

Examples of an amphoteric surfactant include: a carboxybetaine type, a sulfobetaine type, an aminocarboxylate salt and an imidazolium betaine.

Examples of a nonionic surfactant include: polyoxyethylene alkylether, polyoxypropylene polyoxyethylene alkylether, a polyoxyethylene secondary alcohol ether, a polyoxyethylene alkylphenyl ether, a polyoxyethylene sterol ether, a polyoxyethylenelanolin derivative polyoxyethylene polyoxypropylene alkyl ether, polyoxyethylene alkylester, a polyoxyethyleneglycerine aliphatic acid ester, a polyoxyethylene castor oil, a hydrogenated castor oil, a polyoxyethylene sorbitol aliphatic acid ester, a polyethylene glycols aliphatic acid ester, an aliphatic acid monoglyceride, a polyglycerine aliphatic acid ester, a sorbitan aliphatic acid ester, polyoxyethylene sorbitan aliphatic ester, a propylene glycol aliphatic acid ester, a cane sugar aliphatic acid ester, an aliphatic acid alkanol amide, polyoxyethylene alkylamide, a polyoxyethylene aliphatic acid amide, a polyoxyethylene alkylamine, an alkylamine oxide, an acetyleneglycol, an ethoxylated acetylene glycol, acetylene alcohol.

Examples of the fluorochemical surfactants include nonionic fluorochemical surfactants, anionic fluorochemical surfactants, and amphoteric fluorochemical surfactants. Examples of the nonionic fluorochemical surfactants include perfluoroalkyl phosphoric acid ester compounds, perfluoroalkyl ethylene oxide adducts, and polyoxyalkylene ether polymer compounds having perfluoroalkyl ether groups as side chains. Among these, polyoxyalkylene ether polymer compounds having perfluoroalkyl ether groups as side chains are preferable because they are low in foaming property.

The present primer composition can comprise one or more solvents, which are not particularly limited, and can comprise water and/or organic solvents, e.g. water-soluble organic solvents like polyhydric alcohols, polyhydric alcohol alkyl ethers, polyhydric alcohol aryl ethers, nitrogen-containing heterocyclic compounds, amides, amines, ammonium compounds, sulfur-containing compounds, propylene carbonate, and ethylene carbonate. According to certain embodiments, essentially no or no solvent, like water, organic solvents, etc., is contained in the present primer composition.

The present primer composition can further comprise one or more oxygen scavengers, which is not particularly restricted. If an oxygen scavenger is contained, it can be also adapted to a photo initiator used. For example, the oxygen scavenger can function - according to certain embodiments - as co-initiator for a type II photo initiator, e.g. when the oxygen scavenger is an amine, e.g. in case the type II photo initiator is a thioxanthone, e.g. isopropylthioxanthone.

Also one or more polymerization inhibitors can be contained in the present primer composition for increasing the shelf life thereof. The type of polymerization inhibitor is not particularly limited and can be suitably set. For example, suitable polymerization inhibitors for acryl-based polymerization systems include phenothiazine and compounds with similar structures, namely, phenoxazine, phenothiazine, promazine, promazine hydrochloride, N,N'-dimethylphenazine, carbazole, N-ethylcarbazole, N-benzylphenothiazine, and N-(1-phenylethyl)phenothiazine, as well as derivatives thereof. Alternatively or additionally, hindered phenols, such as hydroquinone, 4-methoxyphenol, methoxyhydroquinone and BHT can be used. Alternatively or additionally, Genorad 16, Genorad 18, Genorad 20, Genorad 21 or Genorad 22 can be used. Combinations of inhibitors may also be used. The amount of the polymerization inhibitor is not particularly limited as long as it enables a polymerization inhibition during storage but does not prevent polymerization during the application and curing process. Preferably, the inhibitor is present in an amount of less than 4wt% based on the total weight of the primer composition, more preferably in an amount of less than 3wt% based on the total weight of the primer composition, such as in an amount of less than 2wt% based on the total weight of the primer composition, for example in an amount of less than 1wt% based on the total weight of the primer composition.

According to certain embodiments, the further additives are contained in the primer composition in an amount of between 0 and 10 wt.%, e.g. between 0 and 5 wt.%, for example between 0 and 2 wt.%, based on total weight of the primer composition.

A further aspect of the present invention is directed to a kit, comprising the primer composition of the present invention, and at least one radiation-curable ink composition.

In the kit the at least one radiation-curable ink composition is not particularly restricted, and it is also possible to provide more than one radiation curable ink composition, e.g. for printing different colors.

According to certain embodiments, the at least one radiation-curable ink composition comprises a radiation-curable gelling ink, which is not particularly restricted. For example, a curable gelling ink formulation as disclosed in EP3173447 A1, which is incorporated herein with regard to the gelling ink formulation, can be applied in the present kit as the at least one radiation-curable ink composition. However, of course also other radiation-curable ink compositions can be applied, i.e. also non-gelling radiation-curable inks.

Another aspect of the present invention relates to a method of applying an image onto a recording medium, comprising the steps of
- applying the present primer composition onto the recording medium;
- optionally curing the primer composition;
- applying at least one radiation-curable ink composition onto the primer composition; and
- curing the at least one radiation-curable ink composition.

Apart from these steps, also other steps like media pre-treatment, particularly before applying the present primer composition, and/or drying, e.g. after curing the at least one radiation-curable ink composition, etc., which are used in printing methods can be applied, which are not particularly restricted.

In this method the recording medium is not particularly restricted. Suitable recording media for use in the present method are not particularly limited to any type. The recording/receiving medium may be suitably selected depending on the intended application. Suitable recording/receiving media may be, but are not limited to, paper (plain or recycled, etc.), cardboard, glass, metal foil, and plastic sheets (for example PE, PP, PVC and PET films). According to certain embodiments, the recording medium comprises a glass onto which the primer composition is at least partially applied. It was particularly found that the present primer composition can be suitably applied to glass and adheres thereon sufficiently.

In the present method, the applying of the present primer composition onto the recording medium is not particularly restricted, and any conventionally known methods can be used. Specific examples of an application way include, for example: a roller coating, an ink-jet application, a curtain coating and a spray coating. There is no specific restriction in the number of times with which the pre-treatment liquid is applied. It may be applied at one time, or it may be applied in two times or more.

According to certain embodiments, the primer composition is applied in an amount to achieve a thickness of the deposited primer composition of 0.1 to 50 µm, preferably 1 to 30 µm further preferably 2 to 20 µm. According to certain embodiments, the primer composition has a thickness after curing of 0.1 to 50 µm, preferably 1 to 30 µm further preferably 2 to 20 µm.

The optionally curing of the primer composition is also not particularly restricted. It is also possible to cure the primer composition together with the at least one radiation-curable ink composition, i.e. to skip this step. The curing can be adapted to the components of the primer composition, e.g. with regard to an applied radiation, an applied temperature, a curing time, etc. According to certain embodiments, curing the primer composition is carried out using UV radiation. For this step, any suitable UV generating device can be applied.

Furthermore the step of applying at least one radiation-curable ink composition onto the primer composition is not particularly restricted, and any suitable radiation-curable ink composition can be applied. For example, at least one radiation-curable ink composition as disclosed with regard to the present kit can be applied. The application is not particularly limited as long as the ink composition is deposited on the primer composition on the recording medium. According to certain embodiments, the ink composition is jetted on the primer composition on the recording medium, e.g. using ink-jet printing equipment. A suitable application method for applying the ink composition, as well as suitable other steps used in printing an ink composition, particularly a gelling UV curable ink composition, is e.g. known from US 2015/062271 A1, which is incorporated herein by reference in its entirety, particularly with reference to the printing method. According to certain embodiments, the at least one radiation-curable ink composition comprises a radiation-curable gelling ink. According to certain embodiments, a UV curable ink is applied in the present method, particularly a UV curable gelling ink.

Curing the at least one radiation-curable ink composition is also not particularly restricted. The curing can be adapted to the components of the ink composition, e.g. with regard to an applied radiation, an applied temperature, a curing time, etc. According to certain embodiments, curing the ink composition, e.g. also together with the primer composition, is carried out using UV radiation. For this step, any suitable UV generating device can be applied.

More than one radiation-curable ink composition can be applied in the present method as well, e.g. for providing different colors, and the different radiation-curable ink compositions can be cured one after the other, together, or in groups, and the curing is not particularly restricted. For example, it can be accomplished by applying a suitable radiation, e.g. UV-radiation, for a time sufficient for curing.

Also disclosed is the use of a radiation-curable component in a primer composition for an ink
wherein the radiation-curable component comprises at least one compound selected from the group of components of Formula IVa: 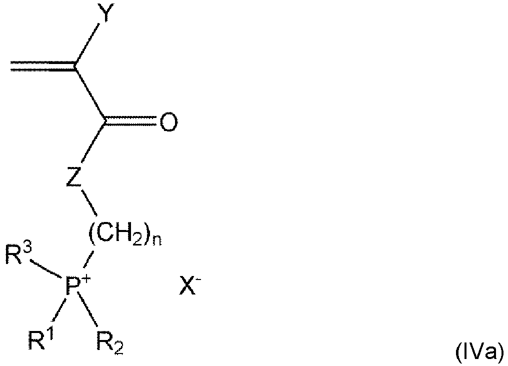
wherein Y is H or CH₃; Z is NH or CH₂; R¹, R² and R³ are independently selected from alkyl residues with 1 to 10 carbon atoms, n is an integer between 1 and 20, preferably between 1 and 10 and X⁻ is an anion selected from the group consisting of F⁻, Cl⁻, Br, I⁻, N₃⁻, CN⁻, NCO⁻, CNO⁻, NCS⁻ and CNS⁻.

According to certain embodiments, the first radiation-curable component comprising at least one cationic NR₄⁺ and/or PR₄⁺ group is not polymeric, i.e. does not contain any repeating units.

The above embodiments can be combined arbitrarily, if appropriate. Further possible embodiments and implementations of the invention comprise also combinations of features not explicitly mentioned in the foregoing or in the following with regard to the Examples of the invention. Particularly, a person skilled in the art will also add individual aspects as improvements or additions to the respective basic form of the invention.

## Claims

1. A primer composition for an ink, comprising a first radiation-curable component, wherein the first radiation-curable component comprises at least one compound selected from the group of components of Formula IVa: 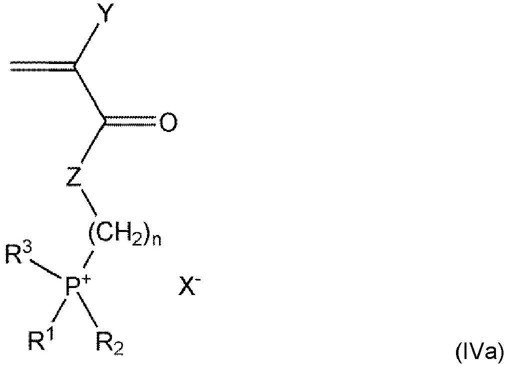 wherein Y is H or CH₃; Z is NH or CH₂; R¹, R² and R³ are independently selected from alkyl residues with 1 to 10 carbon atoms, n is an integer between 1 and 20, preferably between 1 and 10 and X⁻ is an anion selected from the group consisting of F⁻, Cl⁻, Br, I⁻, N₃⁻, CN⁻, NCO⁻, CNO⁻, NCS⁻ and CNS⁻.

2. The primer composition according to claim 1, wherein Z is NH.

3. The primer composition according to claim 2, wherein R1 is (CH₂)ₚCH₃, R2 is (CH₂)_{q}CH₃ and R3 is (CH₂)ₒCH₃, wherein o, p and q are independently selected from an integer between 0 and 9.

4. The primer composition according to claim 2, wherein R1 and R2 are CH₃ and R3 is (CH₂)ₘCH₃ and m is an integer between 0 and 9.

5. The primer composition of any one of the preceding claims, further comprising at least a second radiation-curable component and/or at least one photo initiator.

6. A kit, comprising
the primer composition of any one of claims 1 to 5, and
at least one radiation-curable ink composition.

7. The kit of claim 6 wherein the at least one radiation-curable ink composition comprises a radiation-curable gelling ink.

8. A method of applying an image onto a recording medium, comprising the steps of
- applying the primer composition of any one of claims 1 to 5 onto the recording medium;
- optionally curing the primer composition;
- applying at least one radiation-curable ink composition onto the primer composition; and
- curing the at least one radiation-curable ink composition.

9. The method of claim 8, wherein the at least one radiation-curable ink composition comprises a radiation-curable gelling ink.

10. The method of claim 8 or 9, wherein the recording medium comprises a glass onto which the primer composition is at least partially applied.

11. Use of a radiation-curable component in a primer composition for an ink
wherein the radiation-curable component comprises at least one compound selected from the group of components of Formula IVa: 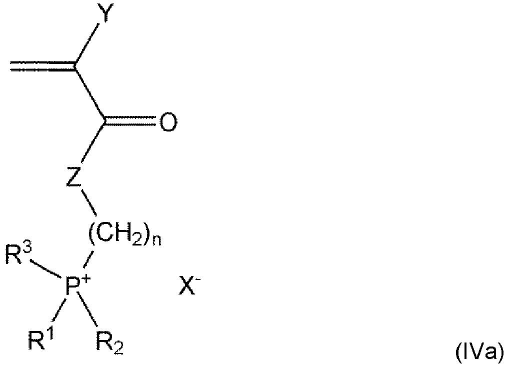
wherein Y is H or CH₃; Z is NH or CH₂; R¹, R² and R³ are independently selected from alkyl residues with 1 to 10 carbon atoms, n is an integer between 1 and 20, preferably between 1 and 10 and X⁻ is an anion selected from the group consisting of F⁻, Cl⁻, Br, I⁻, N₃⁻, CN⁻, NCO⁻, CNO⁻, NCS⁻ and CNS⁻.

## Patentansprüche

1. Eine Grundierungszusammensetzung für eine Tinte, umfassend eine erste strahlungshärtbare Komponente, wobei die erste strahlungshärtbare Komponente mindestens eine Verbindung umfasst, die aus der Gruppe der Komponenten der Formel Iva ausgewählt ist: 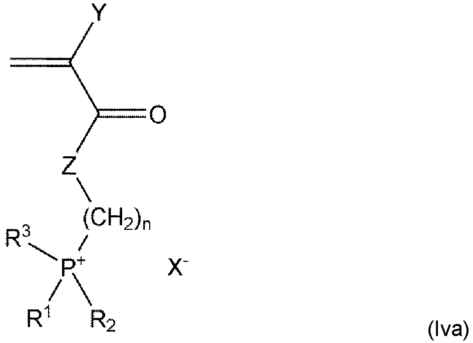 worin Y H oder CH₃ ist; Z NH oder CH₂ ist; R R¹, ² und R³ unabhängig voneinander aus Alkylresten mit 1 bis 10 Kohlenstoffatomen ausgewählt sind, n eine ganze Zahl zwischen 1 und 20, vorzugsweise zwischen 1 und 10 ist und X⁻ ein Anion ist, das aus der Gruppe ausgewählt ist, die aus F⁻, Cl⁻, Br⁻, I⁻, N₃⁻ , CN⁻, NCO⁻ , CNO⁻ , NCS⁻ und CNS- besteht.

2. Die Grundierungszusammensetzung nach Anspruch 1, wobei Z NH ist.

3. Die Grundierungszusammensetzung nach Anspruch 2, wobei R1 (CH₂)ₚCH₃ ist, R2 (CH₂)_{q}CH₃ ist und R3 (CH₂)ₒ CH₃ ist, wobei o, p und q unabhängig voneinander aus einer ganzen Zahl zwischen 0 und 9 ausgewählt sind.

4. Die Grundierungszusammensetzung nach Anspruch 2, wobei R1 und R2 CH₃ sind und R3 (CH₂)ₘCH₃ ist und m eine ganze Zahl zwischen 0 und 9 ist.

5. Die Grundierungszusammensetzung nach einem der vorhergehenden Patentansprüche, die ferner mindestens eine zweite strahlungshärtbare Komponente und/oder mindestens einen Photoinitiator enthält.

6. Ein Kit, bestehend aus
die Grundierungszusammensetzung nach einem der Patentansprüche 1 bis 5, und mindestens eine strahlungshärtbare Tintenzusammensetzung.

7. Das Kit nach Anspruch 6, wobei die mindestens eine strahlungshärtbare Tintenzusammensetzung eine strahlungshärtbare gelierende Tinte umfasst.

8. Ein Verfahren zum Aufbringen eines Bildes auf ein Aufzeichnungsmedium, das die folgenden Schritte umfasst
- Auftragen der Primer-Zusammensetzung nach einem der Patentansprüche 1 bis 5 auf das Aufzeichnungsmedium;
- optionale Aushärtung der Grundierungszusammensetzung;
- Auftragen mindestens einer strahlungshärtbaren Tintenzusammensetzung auf die Grundierungszusammensetzung; und
- Härtung der mindestens einen strahlungshärtbaren Tintenzusammensetzung.

9. Das Verfahren nach Anspruch 8, wobei die mindestens eine strahlungshärtbare Tintenzusammensetzung eine strahlungshärtbare gelierende Tinte umfasst.

10. Verfahren nach Anspruch 8 oder 9, wobei das Aufzeichnungsmedium ein Glas umfasst, auf das die Primerzusammensetzung zumindest teilweise aufgetragen wird.

11. Verwendung einer strahlungshärtbaren Komponente in einer Grundierungszusammensetzung für eine Tinte
wobei die strahlungshärtbare Komponente mindestens eine Verbindung umfasst, die aus der Gruppe der Komponenten der Formel IVa ausgewählt ist: 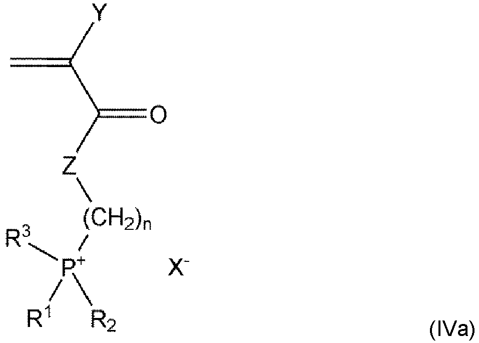
worin Y H oder CH₃ ist; Z NH oder CH₂ ist; R R¹, ² und R³ unabhängig voneinander aus Alkylresten mit 1 bis 10 Kohlenstoffatomen ausgewählt sind, n eine ganze Zahl zwischen 1 und 20, vorzugsweise zwischen 1 und 10 ist und X⁻ ein Anion ist, das aus der Gruppe ausgewählt ist, die aus F⁻ , Cl⁻ , Br⁻ , I⁻ , N₃⁻ , CN⁻ , NCO⁻ , CNO⁻ , NCS⁻ und CNS- besteht.

## Revendications

1. Une composition d'apprêt pour une encre, comprenant un premier composant durcissable par rayonnement, dans laquelle le premier composant durcissable par rayonnement comprend au moins un composé choisi dans le groupe des composants de la formule IVa : 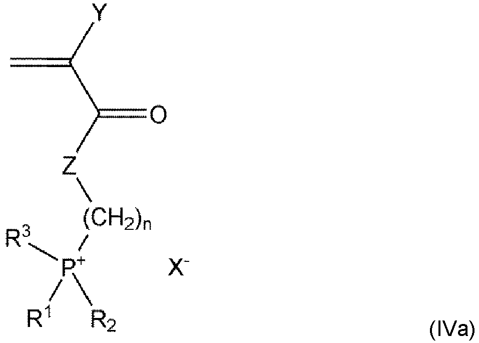 dans lequel Y est H ou CH₃ ; Z est NH ou CH₂ ; R R¹_{,} ² et R³ sont indépendamment choisis parmi les résidus d'alkyle avec 1 à 10 atomes de carbone, n est un nombre entier entre 1 et 20, de préférence entre 1 et 10 et X⁻ est un anion choisi dans le groupe constitué de F⁻ , Cl⁻ , Br⁻ , I⁻ , N₃⁻ , CN⁻ , NCO⁻ , CNO⁻ , NCS⁻ et CNS⁻ .

2. Composition d'apprêt selon la revendication 1, dans laquelle Z est NH.

3. Composition d'apprêt selon la revendication 2, dans laquelle R1 est (CH₂)ₚCH₃, R2 est (CH₂)_{q}CH₃ et R3 est (CH₂)ₒCH₃ , dans laquelle o, p et q sont indépendamment choisis parmi un nombre entier compris entre 0 et 9.

4. Composition primaire selon la revendication 2, dans laquelle R1 et R2 sont CH₃ et R3 est (CH₂)ₘCH₃ et m est un nombre entier entre 0 et 9.

5. La composition d'apprêt de l'une quelconque des revendications précédentes, comprenant en outre au moins un second composant durcissable par rayonnement et/ou au moins un photo-initiateur.

6. Un kit comprenant
la composition d'apprêt de l'une quelconque des revendications 1 à 5, et
au moins une composition d'encre durcissant par rayonnement.

7. Kit de la revendication 6, dans lequel la au moins une composition d'encre durcissant par rayonnement comprend une encre gélifiante durcissant par rayonnement.

8. Méthode d'application d'une image sur un support d'enregistrement, comprenant les étapes suivantes
- application de la composition d'apprêt de l'une quelconque des revendications 1 à 5 sur le support d'enregistrement ;
- en option, durcir la composition de l'apprêt ;
- application d'au moins une composition d'encre durcissant par rayonnement sur la composition d'apprêt ; et
- le durcissement d'au moins une composition d'encre durcissant par rayonnement.

9. Procédé selon la revendication 8, dans lequel la au moins une composition d'encre durcissant par rayonnement comprend une encre gélifiante durcissant par rayonnement.

10. Procédé selon la revendication 8 ou 9, dans lequel le support d'enregistrement comprend un verre sur lequel la composition d'apprêt est au moins partiellement appliquée.

11. Utilisation d'un composant durcissable par rayonnement dans une composition d'apprêt pour une encre
dans lequel le composant durcissable par rayonnement comprend au moins un composé choisi dans le groupe des composants de la formule IVa : 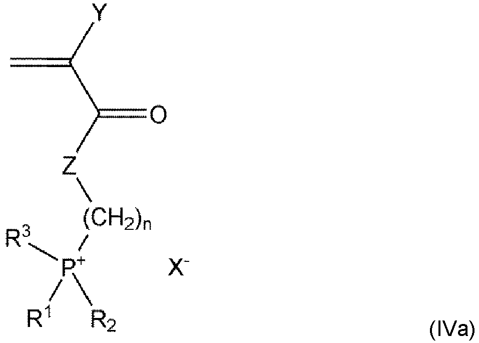
dans lequel Y est H ou CH₃ ; Z est NH ou CH₂ ; R R¹, ² et R³ sont indépendamment choisis parmi les résidus d'alkyle avec 1 à 10 atomes de carbone, n est un nombre entier entre 1 et 20, de préférence entre 1 et 10 et X⁻ est un anion choisi dans le groupe constitué de F⁻ , Cl⁻ , Br , I⁻ , N₃⁻ , CN⁻ , NCO⁻ , CNO⁻ , NCS⁻ et CNS⁻ .
